# DEMANDE DE BREVET EUROPEEN

(11) **EP 0 624 734 A1**
(43) Date de publication de la demande: **17.11.1994**
(21) Numéro de dépôt: 94400089.2
(22) Date de dépôt: 13.01.1994
(51) Int. Cl.: F16C 33/46

(54) **Palier à roulement précontraint à cage perfectionnée et son application notamment à une colonne de direction**

(30) Priorité: 14.04.1993 FR 9304385
(71) Demandeur: NADELLA, F-18102 Vierzon Cédex (FR)
(72) Inventeur: Labedan, Jean-Denis, F-18000 Bourges (FR)
(74) Mandataire: Polus, Camille

(57) **Abrégé**

Le palier qui est destiné à être intercalé entre un arbre (A) avec un retreint (R) médian bordé par deux embouts (E) dont l'un d'eux est coiffé d'un manchon (M) apte à coulisser axialement et un support, est constitué d'un chemin de roulement intérieur (10), d'un chemin de roulement extérieur (20), d'une bague de frettage (30), d'organes roulants (40) et d'une cage (50) est caractérisé en ce que l'une au moins des tranches de la cage est pourvu d'un élément d'appui (5220, 5221, 5223) et en ce que le rétreint est muni d'un élément de butée telle une rampe (121) de manière à normalement maintenir en place la cage (50) axialement fixe et à permettre un coulissement axial de la cage (50) après déformation de l'élément d'appui lorsque le manchon (M) rencontre notamment la cage (50).

Application aux véhicules automobiles terrestres.

## Description

La présente invention concerne les paliers à roulement précontraint déboîtable et, tout spécialement, ceux qui trouvent une application pour le montage des colonnes de direction de véhicules automobiles terrestres.

L'invention concerne les paliers à roulement destinés à assurer la liaison entre un arbre et un support de manière que, outre un degré de liberté en rotation relative entre arbre et support soit possible, un certain degré de liberté en translation axiale relative entre arbre et support soit aussi possible dans certaines circonstances tout à fait exceptionnelles. L'invention vise aussi à l'application d'un tel palier à roulement aux colonnes de direction notamment d'automobiles terrestres.

Dans de nombreux secteurs industriels, il est nécessaire de pouvoir monter un arbre sur au moins un support de manière que ces arbre et support puissent normalement tourner en rotation relative suivant leur axe commun sans pouvoir pour autant se déplacer en translation selon cet axe, sauf circonstances exceptionnelles extrêmes.

Une telle situation se rencontre par exemple dans l'industrie automobile pour le montage des colonnes de direction d'un type où celles-ci sont aptes à se "désarticuler" ou autrement se déformer par exemple par compression ou rétraction pour ne pas faire saillie dans l'habitacle en cas de chocs violents à composante longitudinale axiale importante, repérée par rapport au véhicule, de manière à ne pas mettre en danger la vie du conducteur.

Comme on le sait, classiquement, une colonne de direction se compose d'un support, fourreau ou tube de colonne, qui est fixé au poste de conduite du véhicule par l'intermédiaire de ferrures, goussets ou analogues, reliés à la structure ou coque. Une telle colonne de direction se compose aussi d'un arbre proprement dit, souvent en plusieurs tronçons, qui, par l'intermédiaire du volant, transmet les instructions du conducteur aux roues directrices du véhicule par l'entremise d'un boîtier de direction et d'une timonerie. Cet arbre est monté, au moins partiellement, dans ce support, fourreau ou tube, à l'aide de paliers à roulement, le plus souvent à rouleaux ou aiguilles, de manière à n'autoriser normalement qu'un seul degré de liberté en rotation relative selon l'axe commun de l'arbre et de ce support, fourreau ou tube, à l'exclusion de tout autre degré de liberté tel qu'une translation axiale sauf par exemple en cas de choc frontal ou à grande composante longitudinale, repérée par rapport à l'axe longitudinal traditionnel du véhicule, dépassant un seuil déterminé de l'ordre de 250 daN.

Un tel sous-ensemble qui participe efficacement à la sécurité "passive" doit être fiable, satisfaire à des normes strictes et parfois apparemment contradictoires, tout en restant d'un coût modique.

Un telle colonne de direction doit être par exemple :
- exempte de tout jeu, sans le moindre serrage empêchant les déplacements;
- autoriser une rotation avec un couple qui n'excède pas 0,06 Nm, par exemple;
- avoir une longévité à l'usure qui traditionnellement correspond au moins à la durée de vie moyenne escomptée du véhicule;
- résister aux contraintes de compression radiale qui peuvent se manifester lors d'une tentatives d'effraction alors que l'anti-vol est enclenché, sous l'action d'un couple de 250 Nm;
- résister de par sa rigidité avec un déplacement n'excédant pas 0,2 mm sous une charge de 2,5 daN transmise par le volant;
- résister en fonctionnement normal à toute translation longitudinale de l'arbre par rapport au support, par glissement;
- et cependant céder longitudinalement et se "déboîter" sous des efforts axiaux franchissant une limite préfixée afin de contribuer à la sécurité du conducteur de manière que ce dernier ne soit pas blessé ou contusionné à la suite d'un heurt violent avec le volant à l'occasion d'une collision ou choc brutal.

Cette brève énumération, non exhaustive, illustre combien il est difficile de satisfaire à l'ensemble de toutes ces prescriptions techniques compte-tenu des impératifs économiques auxquels il faut faire face.

Une solution habituellement utilisée pour résoudre ce type de difficulté consiste à se servir de paliers à roulement à billes ou rouleaux ou aiguilles très particuliers, qui sont très différents des roulements à piste circulaire, conique ou sphérique. En effet, les paliers à roulement utilisés pour ce type d'application ont par exemple des pistes ou chemins de roulement polygonaux souvent triangulaires. Ces paliers permettent de compenser les variations des cotes résultant des tolérances de fabrication entre support, tube ou fourreau, et arbre tout en s'assurant de l'absence totale de jeu comme rappelé précédemment.

Des solutions sont par exemple illustrées par les documents FR 2 193 443 et FR 2 586 069 auxquels on se reportera utilement. Ces solutions ne sont toutefois pas totalement satisfaisantes car elles font appel à des constituants relativement nombreux et nécessitent des opérations de montage relativement complexes et multiples et tout ceci grève les coûts.

Le but de l'invention est de produire un palier à roulement pour monter un arbre sur un support, notamment une colonne de direction de véhicule automobile terrestre, de manière que seul un degré de liberté en rotation relative entre arbre et support soit normalement possible mais qui permette toutefois un certain déplacement axial de l'ordre de la dizaine de millimètres environ sous un effort axial ne dépassant pas une limite préfixée de l'ordre de 150 N, et cela par "défonçage" ou "déboîtement" axial du roulement pour ne pas empêcher la colonne de direction de céder à l'occasion d'un dépassement du seuil prédéterminé en matière de sécurité, et qui, bien que d'un coût de fabrication et de montage modique, permette de satisfaire à la plupart des prescriptions techniques qui ont été mentionnées auparavant.

L'invention a pour objet un palier à roulement précontraint à cage perfectionnée qui est destiné à être intercalé entre, d'une part, un arbre avec un retreint médian bordé par deux embouts dont l'un d'eux est coiffé d'un manchon apte à coulisser axialement lorsqu'il est soumis à un effort dépassant un seuil prédéterminé et, d'autre part, un support coaxial à l'arbre, et qui est constitué, notamment, d'un chemin de roulement intérieur associé à l'arbre, d'un chemin de roulement extérieur associé au support, d'une bague de frettage exerçant une contrainte radiale centripète sur le chemin de roulement extérieur, d'organes roulants interposés entre les deux chemins de roulement intérieur et extérieur sur lesquels ils circulent et une cage avec un corps transpercé d'alvéoles pour retenir les organes roulants et avec deux tranches opposées qui terminent le corps. Ce palier à roulement est remarquable en ce que l'une au moins des tranches du corps de la cage est pourvue d'un élément d'appui et en ce que le rétreint est muni d'un élément de butée destiné à coopérer avec cet élément d'appui de manière à, d'une part, normalement contribuer à maintenir en place la cage axialement fixe relativement notamment à l'arbre et, d'autre part, à permettre un coulissement axial de la cage après déformation de l'élément d'appui lorsque le manchon rencontre notamment la cage à la suite d'un effort axial au moins égal à une limite préfixée inférieure à ce seuil prédéterminé.

L'invention a aussi pour objet l'application d'un palier à roulement du type exposé auparavant notamment à une colonne de direction d'un véhicule automobile par exemple terrestre.

D'autres caractéristiques de l'invention ressortiront de la lecture de la description et des revendications qui suivent, ainsi que de l'examen des figures du dessin, donné seulement à titre d'exemple, où:

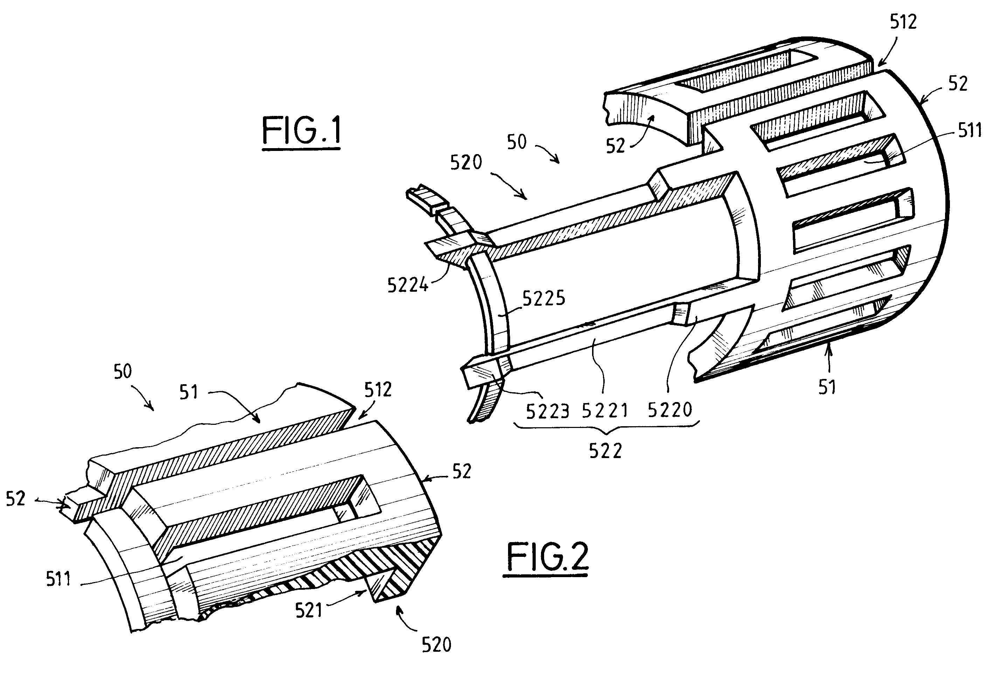

- la Figure 1 est une vue perspective partielle d'un mode de réalisation d'un constituant d'un palier à roulement selon l'invention;
- la Figure 2 est une vue analogue à celle de la Figure 1 d'un autre mode de réalisation de ce constituant;
- les Figures 3A, 3B et 3C sont des demi-coupes méridiennes longitudinales d'un palier à roulement selon l'invention appliqué à une colonne de direction d'automobile de tout type connu, utilisant le constituant illustré sur la Figure 1 à l'état normal sur la vue A et à l'état "déboîté" exceptionnel sur les vues B et C;
- les Figures 4A et 4B sont des vues analogues à celles illustrées sur les Figures 3 où le palier à roulement selon l'invention est équipé du constituant illustré sur la Figure 2, la vue A correspondant à l'état normal et la vue B à l'état "déboîté" exceptionnel, et,
- la Figure 5 est une vue de détail partiel d'une variante d'exécution du mode de réalisation des Figures 2 et 4.

Les paliers à roulement en général, d'une part, et les colonnes de direction de véhicule automobile notamment terrestre, d'autre part, étant bien connus dans la technique, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un palier à roulement selon l'invention avant d'en exposer la fabrication au besoin, le montage et le fonctionnement.

Le palier à roulement précontraint à cage perfectionnée selon l'invention sera décrit dans son application particulière à une colonne de direction de véhicule automobile notamment terrestre, mais il est clair que le palier selon l'invention n'est pas limité à cette seule application.

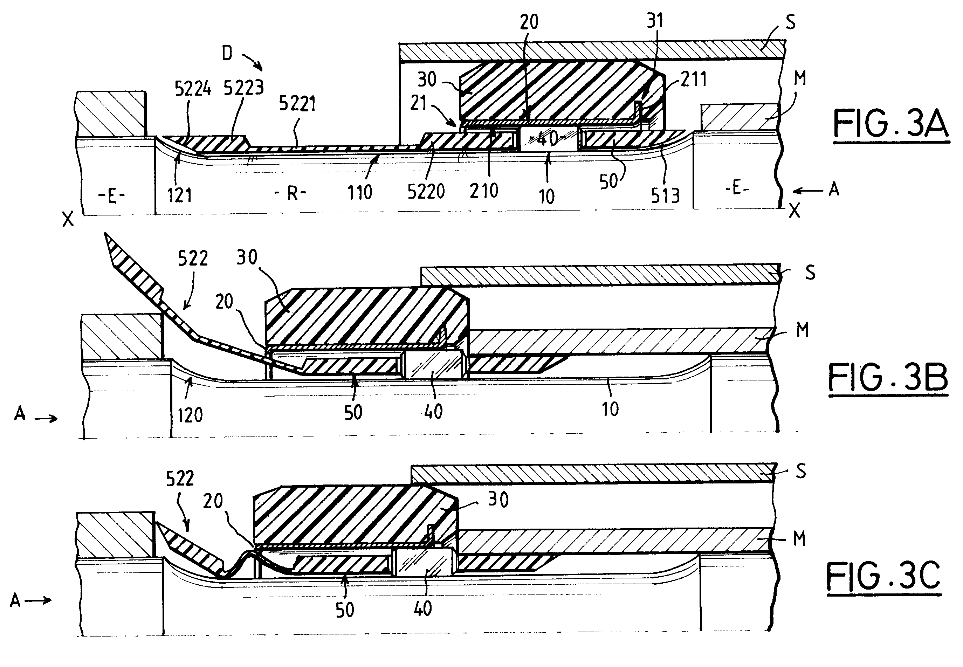

Comme on le voit notamment sur les Figures 3 et suivantes, une colonne de direction D d'automobile se compose, essentiellement, d'un support S et d'un arbre A coaxiaux. Le support S qui se présente à la manière d'un fourreau ou d'un tube ou similaire, est fixé à une structure ou coque non représentée d'un poste de pilotage à l'aide de ferrures, goussets ou analogues. Un volant, fixé à l'une des extrémités de l'arbre A, est destiné à le faire tourner selon l'axe commun X-X sans que pour autant cet arbre puisse, normalement, coulisser par translation selon cet axe, sauf circonstances tout à fait exceptionnelles comme on le comprendra par la suite.

Pour parvenir à ceci, on interpose entre arbre et support au moins un palier à roulement selon l'invention.

Comme on le voit, un palier à roulement précontraint selon l'invention comprend, notamment, un chemin de roulement 10 intérieur, un chemin de roulement 20 extérieur, une bague de frettage 30, des organes roulants 40 et une cage 50.

Comme on le voit, un tel palier à roulement est plus particulièrement destiné à être associé à un arbre de préférence en plusieurs tronçons et, en particulier, à celui de ces tronçons qui assure une fonction de sécurité de par son aptitude à la déformation ou à la rupture par exemple par coulissement, déboîtement, flambement, rupture au cisaillement ou à la torsion. Ce tronçon d'arbre, de tout type connu, présente par exemple un rétreint R médian, bordé par deux embouts E de préférence à section droite non-circulaire avec par exemple deux méplats parallèles opposés. L'un au moins de ces deux embouts E est coiffé d'un manchon M qui est, normalement, rendu solidaire de l'embout qui le porte de manière à ne pas pouvoir ni tourner ni coulisser axialement par rapport à lui et à pouvoir, toutefois, coulisser axialement lorsqu'il est soumis à un effort dépassant un seuil prédéterminé, choisi habituellement de l'ordre de 250 daN pour des raisons de sécurité comme on le comprendra par la suite. Cette liaison frangible entre embout et manchon est, par exemple, assurée à l'aide d'une résine synthétique injectée assurant une liaison apte à se rompre par cisaillement lorsque ce seuil prédéterminé est dépassé. Ceci est classique.

De préférence, le rétreint R présente une surface extérieure 110 qui a été au moins localement convenablement usinée et traitée de manière à servir de chemin de roulement intérieur 10. Le rétreint R est muni d'un élément de butée 120 dont le rôle apparaîtra par la suite. Cet élément de butée se présente, par exemple, à la manière d'une rampe 121 à l'une au moins des jonctions du rétreint R et de l'un des embouts E, ou bien à la manière d'une nervure 122 en saillie ou d'une gorge 123 en retrait.

Le chemin de roulement extérieur 20 est, par exemple, ménagé sur la surface 210 intérieure d'une douille 21 par exemple faite en tôle métallique mince, emboutie et traitée comme il est classique. La section droite de cette douille est de préférence polygonale par exemple triangulaire équilatérale curviligne. Cette douille peut aussi être fendue.

Comme on le voit, l'une au moins des extrémités de la douille 21 présente, de préférence, une lèvre 211 radiale centrifuge, continue ou non.

La bague de frettage 30 est destinée à exercée une contrainte ou précontrainte radiale centripète sur le chemin de roulement extérieur 20. Comme on le voit, cette bague de frettage 30 est interposée entre le chemin de roulement extérieur 20 et le support S de l'arbre A. Cette bague de frettage est faite, de préférence, en un matériau synthétique élastomère de dureté Shore appropriée. Ceci est bien connu dans la technique. La bague de frettage 30 présente, s'il y a lieu, une ou des saignées 31 destinée(s) à recevoir la ou les lèvres 211 de la douille 21 qui porte le chemin de roulement extérieur 20 sur sa surface intérieure 210. Lorsqu'on utilise deux lèvres 211 on peut aussi faire en sorte que celles-ci "encadrent" les flancs d'extrémité de la bague de frettage qu'elles enserrent alors.

Les organes roulants 40 sont interposés entre les deux chemins de roulement 10 et 20 sur lesquels ils circulent. Les organes roulants 40 sont, de préférence, des rouleaux ou des aiguilles.

La cage 50 présente un corps 51 transpercé d'alvéoles 511 pour retenir les organes roulants 40, une fente 512 périphérique longitudinale coupant le corps pour faciliter le montage et, de préférence, un chanfrein 513 dirigé vers l'arbre. La cage 50 est terminée par deux tranches 52 opposées. L'une au moins de ces deux tranches 52 est pourvue d'un élément d'appui 520 destiné à coopérer avec l'élément de butée 120 du rétreint.

La coopération entre l'élément de butée 120 du rétreint et l'élément d'appui 520 de la cage se fait de manière à, d'une part normalement maintenir et/ou contribuer à maintenir en place la cage fixe axialement relativement notamment à l'arbre et, d'autre part, à permettre un coulissement axial de la cage relativement notamment à l'arbre dans des circonstances extrêmes exceptionnelles après déformation de l'élément d'appui, lorsque le manchon rencontre notamment la cage ou douille à la suite d'un effort au moins égal au seuil prédéterminé.

Comme cela est clairement illustré sur les figures du dessin, l'élément d'appui 520 de la cage 50 se présente, par exemple, à la manière d'une collerette 521 radiale centripète, circonférentiellement continue ou discontinue. Cette collerette 521 est normalement placée proche ou au contact de la nervure 121 ou de la gorge 122. Comme on le comprendra par la suite, cette collerette 521 est apte à se rompre et/ou à se déformer. L'élément d'appui 520 peut aussi se présenter à la manière d'au moins une patte 522 longitudinale; ces pattes sont faites chacune d'une embase 5220 reliée à la tranche 52 de la cage 50, d'une lame 5221, relativement mince, prolongeant l'embase 5220 et d'un renflement 5223 terminal au bout de la lame 5221. De préférence, chaque renflement 5223 est muni d'un biseau 5224 qui fait normalement face à la rampe 121. S'il y a lieu, les renflements 5224 sont reliés par un anneau 5225 déformable, par exemple ouvert, frangible et/ou extensible. Comme on le comprendra par la suite, les lames 5221 sont aptes à se déformer par exemple par flexion ou "plissage".

La cage est faite de préférence en un matériau synthétique mis en forme par moulage, par exemple par injection, comme il est classique.

Tous les constituants d'un palier à roulement selon l'invention sont réunis, assemblés et montés comme cela résulte clairement de l'examen des figures du dessin.

On expliquera maintenant le fonctionnement d'un palier à roulement selon l'invention.

A l'état initial, en position normale de fonctionnement, un palier à roulement selon l'invention est dans la situation où il est illustré sur les Figures 3A, 4A et 5. Dans une telle configuration, l'élément de butée du rétreint et l'élément d'appui de la cage sont en contact mutuel et maintiennent les organes roulants en position longitudinale fixe relativement à leurs deux chemins de roulement et, en particulier, par rapport au chemin de roulement intérieur associé à l'arbre. Dans le présent contexte, on entend par relativement fixe axialement un jeu de quelques dixièmes de millimètres et, de préférence, n'excédant pas un millimètre environ par exemple.

Si maintenant un choc violent se produit avec une composante longitudinale axiale supérieure au seuil prédéterminé, par exemple de l'ordre de 250 daN, le manchon M lié à l'embout E du tronçon d'arbre A, comme indiqué précédemment, se sépare de celui-ci et le manchon en coulissant rencontre notamment la cage ou la douille du roulement comme illustré. Le manchon en se déplaçant pousse par exemple la bague de frettage et ensuite les organes roulants et/ou la cage.

Comme on le voit alors sur les Figures 3B et 3C, l'élément d'appui échappe alors à l'élément de butée en passant au-dessus de lui ou en s'écrasant directement contre ce dernier ou indirectement contre une pièce qui lui est liée. En effet, pour ce mode de réalisation, les lames se comportent comme des poutres indépendantes déformables.

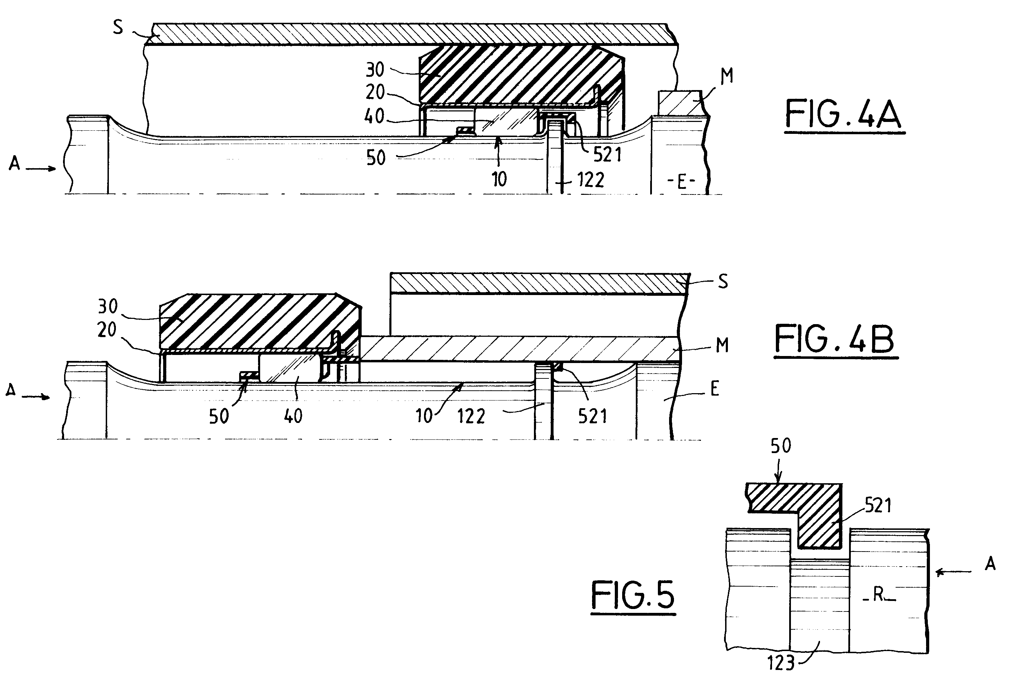

Pour l'autre mode de réalisation, sous l'effet de la poussée du manchon, l'élément d'appui en forme de collerette se rompt comme illustré sur la Figure 4B, ou bien échappe à la nervure ou à la gorge par déformation élastique ou non.

Le "déboîtement" du roulement selon l'invention se produit pour un effort axial ne dépassant pas une limite préfixée inférieure à ce seuil prédéterminé.

De préférence, le "déboîtement" ou "défonçage" du roulement se fait avec un effort axial de l'ordre de 150 N qui est notablement inférieur à la limite choisie habituellement de 250 daN pour la "désarticulation" d'une colonne de direction dite de sécurité.

Comme on pourra l'observer, la présence d'une nervure ou d'une gorge qui se trouve radialement en retrait par rapport à l'un au moins des embouts ne perturbe aucunement le coulissement du manchon. Ces nervures ou gorges peuvent être facilement obtenues par exemple par tournage du tronçon d'arbre, en observant toutefois que le cas de la gorge n'est pas favorable, en principe, au cas où le tronçon d'arbre en question contribue à la sécurité en opérant par torsion.

Ce qui précède met bien en lumière l'intérêt de l'invention et les avantages qu'elle procure en particulier pour l'application proposée.

## Revendications

**1 -** Palier à roulement précontraint à cage perfectionnée qui est destiné à être intercalé entre, d'une part, un arbre avec un retreint médian bordé par deux embouts dont l'un d'eux est coiffé d'un manchon apte à coulisser axialement lorsqu'il est soumis à un effort dépassant un seuil prédéterminé et, d'autre part, un support et qui est constitué, notamment, d'un chemin de roulement intérieur (10) associé à l'arbre, d'un chemin de roulement extérieur (20) associé au support, d'une bague de frettage (30) exerçant une contrainte radiale centripète sur le chemin de roulement extérieur (20), d'organes roulants (40) interposés entre les deux chemins de roulement (10, 20) sur lesquels ils circulent et d'une cage (50) avec un corps (51) transpercé d'alvéoles (511) pour retenir les organes roulants (40) et avec deux tranches (52) opposées qui le terminent, caractérisé en ce que l'une au moins des tranches (52) est pourvu d'un élément d'appui (520) et en ce que le rétreint est muni d'un élément de butée (120) destiné à coopérer avec cet élément d'appui (520) de manière à, d'une part, normalement contribuer à maintenir en place la cage (50) axialement fixe relativement notamment à l'arbre et, d'autre part, à permettre un coulissement axial de la cage (50) après déformation de l'élément d'appui (520) lorsque le manchon rencontre notamment la cage (50) à la suite d'un effort axial au moins égal à une limite préfixée inférieure au seuil prédéterminé.

**2 -** Palier selon la revendication 1, caractérisé en ce que l'élément d'appui (520) est une collerette (521) radiale centripète et en ce que l'élément de butée (120) est une nervure (122) voire une gorge (123) entre les embouts au contact de laquelle (122, 123) est normalement placée la collerette (521).

**3 -** Palier selon la revendication 1 ou 2, caractérisé en ce que l'élément d'appui (520) est au moins une patte (522) longitudinale faite d'une embase (5220) reliée à la tranche (52), d'une lame (5221) prolongeant l'embase (5220) et d'un renflement (5223) terminal au bout de la lame (5221) et en ce que l'élément de butée (120) est une rampe (121) à la jonction du retreint et de l'un des embouts.

**4 -** Palier selon la revendication 3, caractérisé en ce que le renflement (5223) est muni d'un biseau (5224) qui fait normalement face à la rampe (121).

**5 -** Palier selon la revendication 3 ou 4, caractérisé en ce que les renflements (5224) sont reliés par un anneau (5225).

**6 -** Palier selon l'une quelconque des revendications 3 à 5, caractérisé en ce que l'autre tranche (52) du corps (51) est pourvue d'un chanfrein (513) dirigé vers l'arbre.

**7 -** Palier selon l'une quelconque des revendications 1 à 6, caractérisé en ce que la cage (50) est pourvue d'une fente (512) périphérique longitudinale.

**8 -** Palier selon l'une quelconque des revendications 1 à 7, caractérisé en ce que la cage (50) est faite en un matériau synthétique moulé.

**9 -** Palier selon l'une quelconque des revendications 1 à 8, caractérisé en ce que le chemin de roulement extérieur (20) est la surface intérieure (210) d'une douille (21) mince.

**10 -** Palier selon l'une quelconque des revendications 1 à 9, caractérisé en ce que la section droite de la douille (21) a un profil polygonal.

**11 -** Palier selon l'une quelconque des revendications 1 à 10, caractérisé en ce que la bague de frettage (30) est faite en un matériau élastomère.

**12 -** Palier selon l'une quelconque des revendications 9 à 11, caractérisé en ce que la douille (21) présente à l'une au moins de ses extrémités une lèvre (211) radiale centrifuge et en ce que la bague de frettage (30) présente s'il y a lieu une saignée (31) pour recevoir cette lèvre (211).

**13 -** Palier selon l'une quelconque des revendications 1 à 12, caractérisé en ce que les organes roulants (40) sont des aiguilles.

**14 -** Palier selon l'une quelconque des revendications 1 à 13, caractérisé en ce que le chemin de roulement intérieur (10) est constitué par une surface extérieure (110) cylindrique du rétreint médian.

**15 -** Application d'un palier conforme à l'une quelconque des revendications 1 à 14 à une colonne de direction de véhicule automobile terrestre.
